# EUROPÄISCHE PATENTANMELDUNG

(11) **EP 4 040 428 A1**
(43) Veröffentlichungstag der Anmeldung: **10.08.2022**
(21) Anmeldenummer: 22154854.8
(22) Anmeldetag: 02.02.2022
(51) Int. Cl.: G09F 21/04, G09F 7/18

(54) **VERFAHREN ZUM BEFESTIGEN EINES KENNZEICHENS AN EINEM FAHRZEUG UND KENNZEICHENHALTER HIERFÜR**

(30) Priorität: 08.02.2021 AT 500752021
(71) Anmelder: Putz, Iris, 4400 Steyr (AT)
(72) Erfinder: Putz, Roland, 4400 Steyr (AU); Putz, Iris, 4400 Steyr (AU)
(74) Vertreter: Felfernig, Oliver

(57) **Zusammenfassung**

Die Erfindung beschreibt einen Kennzeichenhalter (1) und ein Verfahren zum Befestigen eines Kennzeichens (2) an einem Fahrzeug (3), insbesondere KFZ-Fahrzeug, Pedelecs, usw., bei dem das Kennzeichen (2) über einen Kennzeichenhalter (1) befestigt wird, wobei der Kennzeichenhalter (1) aus zwei Kennzeichenhalteteile (7,8) gebildet wird und ein Kennzeichenhalteteil (7,8) am Fahrzeug (3) und das weiter Kennzeichenhalteteil (8,7) direkt am Kennzeichen (2) befestigt wird, sodass bei der Montage des Kennzeichen (2) die beiden Kennzeichenhalteteil (7,8) des Kennzeichenhalters (1) ineinander greifen. Ein Kennzeichenhalteteil (7), vorzugsweise jener zur Befestigung am Kennzeichen (2), wird mit einem vorzugsweise flexiblen Befestigungsmittel (19) in den weiteren vorzugsweise rahmenartig ausgebildeten weiteren Kennzeichenhalteteil (8) eingesetzt, insbesondere verrastet, wobei das vorzugsweise rahmenartigen Kennzeichenhalteteil (8) ein korrespondierendes Befestigungsmittel (22) zur Verrastung der beiden Kennzeichenhalteteile (7,8) zueinander aufweist.

## Beschreibung

Die Erfindung betrifft ein Verfahren zum Befestigen eines Kennzeichens an einem Fahrzeug und Kennzeichenhalter, wie diese in den Ansprüchen 1 und 10 beschrieben sind.

Üblicherweise werden Kennzeichen für Fahrzeuge, insbesondere PKW, LKW oder Motorräder, über unterschiedlichste Kennzeichenhalter am Fahrzeug befestigt. Diese Kennzeichen sind einerseits mit dem Fahrzeug, insbesondere PKW, LKW oder Motorräder, und andererseits mit dem Fahrzeughalter über die Zulassung, einer Versicherung, insbesondere Haftpflichtversicherung und/oder Kaskoversicherung, verbunden, wobei dies in den unterschiedlichsten Ländern unterschiedlich geregelt ist.

Derartige Kennzeichentafelhalter reichen von planen Befestigungsplatten bis hin zu mehrschichtigen rahmenartigen Aufbauten. Sie sind dabei einerseits derart ausgebildet, dass sie an unterschiedlichsten Fahrzeugtypen und -marken montiert werden können und andererseits die Kennzeichentafel in ihrer Position halten und deren ungewolltes Lösen im Verkehrsbetrieb verhindern.

Darüber hinaus werden heutzutage auch immer öfters die Kennzeichen über doppelseitige Klebestreifen direkt am Fahrzeug befestigt, insbesondere geklebt. Nachteilig ist bei derartigen Lösungen, dass beim Ankleben der Kennzeichen diese nach längerer Zeit nur mehr sehr lösen lässt, sodass meist das Kennzeichen verformt wird.

Es kommen aber auch immer öfters Klettbänder zum Einsatz, bei denen ein Teil am Fahrzeug und ein weiterer Teil am Kennzeichen befestigt werden, sodass anschließend die Klettbänder zusammengedrückt werden können, sodass sich die hacken-förmigen Fasern verhaken können. Nachteilig ist bei den Klettbänder, dass Schmutz zwischen dem Fahrzeug und dem Kennzeichen über einen längeren Zeitraum eindringen kann, der sich so verfestigen kann, dass wiederum ein Lösen des Kennzeichens nur noch schwer ohne Verformung des Kennzeichens möglich ist.

Auch ist ein Wechselsystem der Fa. TEC iConnect GmbH - https://www.tec-iconnect.com/varianten/ - bekannt, deren Kennzeichenhalter aus einer ebenflächiges Grundplatte mit Vertiefungen, welche am Auto montiert wird und einer Deckplatte, die auf der Rückseite des Kennzeichens mit doppelseitigen Klebestreifen befestigt wird, besteht. Die beiden Platten weisen weiters zwei Positionierpunkte auf, die gleichzeitig mit Magneten bestückt sind, wobei die Positionierpunkte an der Grundplatte leicht vorstehen und in eine Vertiefung an der Deckplatte eingreifen. Nachteilig ist hierbei, dass diese ebenflächige Grundplatte und Deckplatte nicht beliebig verformt werden kann, um an die Kontur des Fahrzeuges anzupassen, da bei zu starker Krümmung die Positionspunkte nicht mehr ineinandergreifen.

Bei einfachen, ebenen Befestigungsplatten ist weiters von Nachteil, dass diese zur optischen Wertigkeit des Fahrzeugs nicht beitragen, da sie bei Montage des Kennzeichens gänzlich abgedeckt sind bzw. durch die plane Ausbildung jedenfalls den seitlichen, meist unschönen Abschluss von Kennzeichentafeln nicht abdecken und von der Fahrzeugkontur vorstehen. Dies wird insbesondere durch den Umstand verstärkt, dass die Bereiche am Fahrzeug, die zur Montage des Kennzeichentafelhalters vorgesehen sind, meist gekrümmt ausgeführt sind.

Aus diesen Gründen werden heutzutage Kennzeichenhalter aus Kunststoff verwendet, bei denen das Kennzeichen in einen Rahmen eingesetzt werden. Der Kennzeichenhalter kann dabei einfach verformt werden und wird an das Fahrzeug vorzugsweise geschraubt, sodass das Kennzeichen anschließend nur noch eingeklickt bzw. eingesteckt werden muss.

Bei derartigen Kennzeichenhaltern haben sich unterschiedlichste Lösungen zur Halterung und Befestigung von Kennzeichentafeln etabliert.

So sind aus der AT 505 328 B1 und aus der DE 20 2011 004 922 U1 Kennzeichentafelhalter zu entnehmen, die einen Schiebe-Haken-Verschluss aufweisen. Bei derartigen Lösungen, die mittlerweile sehr gängig sind, wird die Kennzeichentafel in den Kennzeichentafelhalter eingelegt und durch Verschieben des Schiebe-Hakens eine Fixierung erreicht. Jene Seite, in der die Durchbrechung für den Schiebe-Haken-Verschluss angeordnet ist, ist dabei breiter und massiver ausgebildet, um eine stärkere Fixierung zu erreichen.

Aus der DE 10 2013 202 558 A1 ist ein Kennzeichentafelhalter mit einem klappbaren unteren Rahmenteil bekannt, wobei hier das Kennzeichen eingelegt und durch Zuklappen des Rahmens fixiert wird.

Bei obigen Lösungen werden die breiteren Rahmen durchwegs als Werbeleiste genutzt.

Genauso gibt es aber Kennzeichentafelhalter mit gesonderten, aufsteckbaren Werbeleisten, wie diese beispielsweise der DE 20 2013 101 449 U1
oder der DE 20 2010 001 657 U1 zu entnehmen sind.

Bei all diesen Kennzeichenhalter weist die Grundplatte zahlreiche runde oder schlitzförmige Ausnehmungen auf, die dazu dienen, den Kennzeichentafelhalter auf den unterschiedlichsten, am Markt erhältlichen Fahrzeugmodellen, bevorzugt mittels Schrauben, zu befestigen. Genauso sind auf dem Großteil der Kennzeichentafelhalter Bereiche zur Platzierung von Werbetexten vorgesehen.

Darüber hinaus gibt es auch einfache Kennzeichentafelhalter, wie beispielsweise in der DE 1 900 489 U geoffenbart. Nachteilig dabei ist, dass die Befestigung am Rahmen vorgesehen ist, wodurch einerseits die Befestigungsmittel bzw. Schrauben sichtbar und diese im montierten Zustand der Kennzeichentafel nicht abgedeckt sind. Weiters muss der Rahmen entsprechend breit und massiv ausgebildet sein, damit die Befestigung mittels Schrauben überhaupt möglich ist.

Bei den älteren bekannten Lösungen, wie der DE 1 900 489 U, handelt es sich meist um optisch nicht sehr ansprechende Kennzeichentafelhalter, wie sie in der heutigen Zeit gefordert werden. Neuere Lösungen, wie einleitend beschrieben, sind sehr stark auf die Eignung für Händler, insbesondere die Werbemöglichkeit durch Anbringen von Marken- oder Händlernamen am Kennzeichentafelhalter, ausgelegt.

In letzte Zeit sind jedoch immer mehr Lösungen erwünscht, bei denen keine störenden Rahmen mehr sichtbar sind, wobei derartige Kennzeichenhalter nicht oder nur eingeschränkt Anwendbare Lösungen, wie beispielsweise der zuvor genannte Kennzeichenhalter der der Fa. TEC iConnect am Markt erhältlich. Somit befestigen die KFZ-Halter die Kennzeichen häufig über doppelseitige Klebebänder oder über Klettbänder, die jedoch bei zu langer Befestigung kaum noch vom Fahrzeug entfernt werden können. Insbesondere kommt es bei zu großer Krafteinwirkung beim Herunterziehen der Kennzeichen es zu Verformungen, sodass das Kennzeichen oftmals nicht wieder verwendet werden kann.

Die Aufgabe der Erfindung liegt darin, einerseits die obgenannten Nachteile zu vermeiden und eine einfach Montage und auch Demontage eines Kennzeichens am Fahrzeug vorzugsweise ohne sichtbare Rahmen zu erleichtern. Eine weitere Aufgabe liegt darin, dass die optische Wertigkeit des Fahrzeugs nicht zu beeinträchtigen.

Die Aufgabe wird durch die Erfindung, insbesondere den Ansprüchen, gelöst.

Die Aufgabe wird durch ein Verfahren zum Befestigen eines Kennzeichens an einem Fahrzeug gelöst, bei dem ein Kennzeichenhalteteil, vorzugsweise jener zur Befestigung am Kennzeichen, mit einem vorzugsweise flexiblen Befestigungsmittel in den weiteren vorzugsweise rahmenartig ausgebildeten weiteren Kennzeichenhalteteil eingesetzt wird, insbesondere verrastet wird, wobei das vorzugsweise rahmenartigen Kennzeichenhalteteil ein korrespondierendes Befestigungsmittel zur Verrastung der beiden Kennzeichenhalteteile zueinander aufweist.

Vorteilhaft ist hierbei, dass durch das ineinander stecken der beiden Kennzeichenhalteteile ein Kennzeichenhalter mit geringer Bauhöhe geschaffen wird und somit keine optische Beeinträchtigung durch die Montage mit dem erfindungsgemäßen Kennzeichenhalter am Fahrzeug gegeben ist. Dabei ist es möglich, dass der Kennzeichenhalter, der durch die beide ineinander steckbare Kennzeichenhalteteile gebildet ist, vollständig vom Kennzeichen abgedeckt werden kann, d.h., dass der Kennzeichenhalter vollständig hinter dem Kennzeichen angeordnet und versteckt ist und keinerlei sichtbare Rahmen oder Haltegriffe am Kennzeichen sichtbar sind.

Der wesentliche Vorteil bei dem erfindungsgemäßen zweiteiligen Kennzeichenhalter liegt darin, dass die einzelnen Kennzeichenhalteteile unabhängig voneinander montiert werden. Zur Unterstützung der Montage ist es auch möglich, dass eine Schablone zur Ausrichtung der Kennzeichenhalteteile, wie dies in einer anderen Anmeldung für eine andere Ausbildung eines zweiteiligen neuartigen Kennzeichenhalter beschrieben ist, eingesetzt werden kann. Mit der Schablone werden beispielsweise zuerst die Kennzeichenhalteteile am Kennzeichen positioniert und vorzugsweise mit einem doppelseitigen Klebeband am Kennzeichen befestigt, wobei die Schablone dabei die Form und Größe des Kennzeichens aufweist, sodass diese nur übereinandergelegt werden. Anschließend wird die Schablone für die Befestigung des Weiteren Kennzeichenhalteteils am Fahrzeug positioniert und die Kennzeichenhalteteile in die entsprechenden Ausnehmungen der Schablone eingelegt, sodass diese anschließend beispielsweise über Schrauben am Fahrzeug befestigt werden und die Schablone entnommen werden kann. Nachdem sämtliche Kennzeichenhalteteile für die Befestigung des Kennzeichens am KF-Fahrzeug befestigt sind, kann das Kennzeichen an das Fahrzeug einfach aufgesteckt werden, sodass die Kennzeichenhalteteile ineinandergesteckt werden und miteinander verrasten und somit das Kennzeichen montiert ist.

Vorzugsweise werden zum Befestigen eines Kennzeichens zwei erfindungsgemäße rahmenlose Kennzeichenhalter verwendet.

Von Vorteil sind die Maßnahmen, bei denen der Kennzeichenhalter nach einem der Ansprüche 10 bis 16 ausgebildet wird. Dadurch wird eine Befestigungsmöglichkeit eines Kennzeichens ohne sichtbare Rahmen oder Haltegriffe möglich, die die Optik des Fahrzeuges beeinflussen kann. Vorzugsweise sind die Kennzeichenhalter, insbesondere die beiden Kennzeichenhalteteile, derart ausgebildet, dass diese eine wesentlich kleiner Baugröße, insbesondere Länge und Breite, aufweist, als das Kennzeichen, sodass im montierten Zustand keine Teile des Kennzeichenhalter sichtbar sind. Um den optischen Eindruck des Fahrzeuges nicht zu beeinflussen, ist es auch notwendig, dass der Kennzeichen nicht zu Dick ausgebildet ist, da ansonst bei montieren Kennzeichen dieses zu weit vorragt. Erfindungsgemäß weist der Kennzeichenhalter im zusammengesteckten Zustand der beiden Kennzeichenhalteteile eine Gesamthöhe bzw. Dicke zwischen 3 und 8 mm, insbesondere 5mm auf.

Es sind die Maßnahmen von Vorteil, bei denen zum Lösen der beiden Kennzeichenteile ein Entriegelungsmittel, insbesondere ein Schraubenzieher, Nagel, Metallband, Metallstab, usw., durch eine Entriegelungsöffnung eingeschoben wird, wodurch über das Entriegelungsmittel Druck auf das Befestigungsmittel zum Lösen des eingesetzten Kennzeichenhalteteils ausgeübt wird. Dadurch ist es möglich, dass eine einfache Demontage des Kennzeichens von Fahrzeug ohne großen Kraftaufwand durchgeführt werden kann, da hierzu lediglich das flexible Befestigungsmittel aus durch das Einführen eines Entriegelungsmittel von der Verrastung gelöst wird, sodass das Kennzeichen einfach abgenommen werden kann. Damit wird eine Verformung, wie dies bei einer Befestigung mit Klebebändern oder Klettbänder der Fall ist, vermieden.

Vorteilhaft sind die Maßnahmen, bei denen das vorzugsweise flexible Befestigungsmittel über einen Teilbereich des Außenumfangs des Kennzeichenhalteteils zum Einsetzen in den Kennzeichenhalteteils, insbesondere in den Rahmen oder Aufnahmebereich, angeordnet wird. Dadurch ist es möglich, dass das Kennzeichenmittel einfach in einen weiteren rahmenartigen Kennzeichenhalteteil eingesteckt wird, wobei sich das eingesteckte Kennzeichenhalteteil mit einer entsprechend korrespondierenden Befestigungsmittel am Rahmen des Weiteren Kennzeichenhalteteils verrastet. Damit wird erreicht, dass der Kennzeichenhalter, insbesondere die beiden Kennzeichenhalteteile, rechteckig, quadratisch, rund oder oval ausgebildet sein kann, da eine Verrastung über den Rahmen eines Kennzeichenhalteteils und die Außenfläche bzw. Außenseite des Weiteren Kennzeichenhalteteils erfolgt.

Vorzugsweise bilden die beiden ineinander gesteckten Kennzeichenhalteteile eine ebene nicht überlappende Fläche aus, wobei natürlich eine Überlappung bei entsprechender Konstruktion ebenfalls möglich wäre, die jedoch den Nachteil hat, dass damit eine größere Bauteildicke bzw. Gesamtdicke des Kennzeichenhalters die Folge ist.

Von Vorteil sind die Maßnahmen, bei denen der Kennzeichenhalteteil für das Fahrzeug vorzugsweise über eine Schraubverbindung und das Kennzeichenhalteteil für das Kennzeichen vorzugsweise über ein doppelseitiges Klebestreife am Kennzeichen befestigt wird. Dadurch wird erreicht, dass die Befestigung am Fahrzeug wie bei allen anderen aus dem Stand der Technik bekannte Kennzeichenhalter erfolgt und lediglich die Befestigung am Kennzeichen über einfache doppelseitige Klebebänder erfolgt, die vorzugsweise dem Kennzeichenhalter beim Verkauf beigelegt werden. Die Befestigung des Kennzeichens mit doppelseitigen Klebebändern ist insofern nicht problematisch, das bei einem Fahrzeugwechsel das Kennzeichen einfach kraftlos durch die Verwendung eines Entnahmemittels demontiert werden kann, worauf anschließend der Kennzeichenhalteteil vom Fahrzeug geschraubt wird, sodass dieser Kennzeichenhalteteil bei einem anderen Fahrzeug montiert, insbesondere festgeschraubt wird, worauf das Kennzeichen mit den aufgeklebten Kennzeichenhalteteilen wiederum an einem anderen Fahrzeug befestigt, insbesondere verrastet werden kann. D.h., dass bei einem Fahrzeugwechsel und Beibehaltung des Kennzeichen, wie es heutzutage üblich ist, der bzw. die Kennzeichenhalteteile nicht vom Kennzeichen gelöst werden müssen, sondern diese wiederverwendet werden können. Dabei ist es auch möglich, dass die einzelnen Kennzeichenhalteteile, insbesondere jenes, welches mit einer Schraubverbindung ans Fahrzeug befestigt wird, einzeln nachgekauft werden können.

Es sind aber auch die Maßnahmen von Vorteil, bei denen im zusammengesteckten Zustand der beide Kennzeichenhalteteile eine gesamte Dicke bzw. Bauhöhe zwischen 3mm und 10mm, insbesondere 5 mm, erzielt wird. Dadurch wird erreicht, dass die Kennzeichen nicht zu weit von der Karosserie des Fahrzeuges absteht und somit keine Verletzungsgefahr für Personen entstehen. Weiters entsteht auch keine optische Beeinträchtigung des Fahrzeuges, wie es bei zu weit abstehende Gegenstände der Fall ist.

Von Vorteil sind die Maßnahmen, bei denen der Kennzeichenhalteteil den weiteren Kennzeichenhalteteil vollständig aufnimmt und vorzugsweise umschließt. Dadurch wird erreicht, dass damit ein einzige Baueinheit geschaffen wird, die vorzugsweise eine ebene Fläche aufweist.

Es sind die Maßnahmen von Vorteil, bei denen im vorzugsweise rahmenartigen Kennzeichenhalteteil ein Befestigungssteg vorzugsweise mit einer Befestigungsbohrung für ein Schraube angeordnet wird. Dadurch wird erreicht, dass die Befestigung des rahmenartigen Kennzeichenhalteteils am Fahrzeug im Zentrum des Kennzeichenhalters erfolgen kann, wobei das Befestigungsmittel durch den weiteren Kennzeichenhalteteil abgedeckt wird. Hierzu ist es von Vorteil, wenn am Befestigungssteg und am weiteren Kennzeichenhalteteil Vertiefungen zur Aufnahme eines Schrauben- oder Nietkopf angeordnet sind.

Vorteilhaft sind die Maßnahmen, bei denen das Kennzeichen im montierten Zustand den Kennzeichenhalter vollständig abdeckt. Dadurch wird erreicht, dass keine optische Beeinträchtigung durch Rahmen oder Haltegriffe vorhanden sind und es für den Betrachter so Aussicht, als ob das Kennzeichen direkt am Fahrzeug montiert wäre.

Durch den Einsatz des erfindungsgemäßen Kennzeichenhalters ist aber eine einfach Montage als auch eine einfache und vor allem kraftlose Demontage des Kennzeichen jederzeit möglich, sodass beim Herunternehmen des Kennzeichens keine Verformung am Kennzeichen entstehen. Dadurch kann der Kennzeichenhalter auch für die Montage von Schildern bzw. vorzugsweise flachen Gegenständen eingesetzt werden.

Weiters wird die Aufgabe der Erfindung aber auch durch einen Kennzeichenhalter gelöst, bei dem ein Kennzeichenhalteteil mit zumindest einer Vertiefung oder Ausnehmung ausgebildet ist, in dem das weitere Kennzeichenhalteteil aufgenommen und beide über Befestigungsmittel miteinander fixiert und befestigt sind. Vorteilhaft ist hierbei, dass die zweiteilige Ausbildung des Kennzeichenhalters eine einfach Montage als auch eine einfache Demontage des Kennzeichen am Fahrzeuges möglich ist. Dabei kann der Kennzeichenhalter derart ausgebildet werden, dass dieser vollständig vom Kennzeichen verdeckt wird. Wesentlich ist jedoch, dass durch das ineinandergreifen der beiden Kennzeichenhalteteile zur Bildung des Kennzeichenhalters die Dicke bzw. Gesamtdicke möglichst geringgehalten wird, um dein zu weites Abstehen, was auch gesetzliche Konsequenzen zu folgen haben würde, vermieden wird. der erfindungsgemäße Kennzeichenhalter weist dabei vorzugsweise eine Dicke bzw. Gesamtdicke bzw. Höhe von ca. 3 bis 8 mm, insbesondere 5 mm, auf. Dadurch wird keine optische Beeinträchtigung durch abstehende Kennzeichen am Fahrzeug hervorgerufen.

Von Vorteil ist eine Ausbildung, bei der ein Kennzeichenhalteteil über einen Teilbereich des Außenumfangs bzw. der Außenfläche ein Befestigungsmittel aufweist, welches mit dem weiteren Kennzeichenhalteteil verbindbar ist. Dadurch ist eine einfach Verrastung am korrespondierenden rahmenartigen weiteren Kennzeichenhalteteil möglich, da an diesem ein entsprechendes korrespondierendes Befestigungsmittel, insbesondere Rastkante, aufweist. Durch diese Ausbildung ist es auch möglich, dass die Form des Kennzeichenhalters beliebig ausgebildet werden kann, d.h., dass der Kennzeichenhalter, insbesondere die Kennzeichenhalteteile, rund, oval, quadratisch oder Rechteck, usw., ausgebildet werden können. Dies ist deshalb möglich, dass der Kennzeichenhalteteil mit dem vorzugsweise flexiblen Befestigungsmittel an der Außenseite bzw. am Außenumfang auf der Rückseite des Kennzeichens über doppelseitige Klebebänder befestigt und vom Kennzeichen verdickt wird, sodass die Formgebung des Kennzeichenhalteteils beliebig ausgebildet sein kann.

Es ist eine Ausbildung von Vorteil, bei der die Größe des Kennzeichenhalter, insbesondere der Kennzeichenhalteteile, derart ausgebildet ist, dass nach der Montage des Kennzeichens am Fahrzeug oder einem anderen Gegenstand die Kennzeichenhalteteile vollständig vom Kennzeichen abgedeckt sind. Dadurch wird erreicht, dass der Kennzeichenhalter vollständig hinter dem Kennzeichen verdeckt angeordnet ist, sodass es den Eindruck macht, als ob das Kennzeichen direkt am Fahrzeug befestigt ist. Durch den Einsatz des Kennzeichenhalters ist es jedoch möglich, dass das Kennzeichen jederzeit rasch und vor allem kraftlos montiert als auch demontiert werden kann.

Von Vorteil ist eine Ausbildung, bei dem zum Befestigen eines Kennzeichens zwei Kennzeichenhalter am Fahrzeug befestigt sind. Dadurch wird erreicht, dass der Karosserieform des Fahrzeuges auch sehr stark gekrümmt sein kann, da zwei kleinere Kennzeichenhalter verwendet werden können, die durch die getrennte Montage nicht verformt werden müssen. Somit wird eine sicher Verbindung, insbesondere Verrastung, des Kennzeichens erreicht.

Vorteilhaft ist auch eine Ausbildung, bei der die Ausnehmung bzw. Vertiefung des Kennzeichens breiter als die Breite des Weiteren in die Ausnehmung bzw. Vertiefung einsteckbaren Kennzeichenhalteteil ausgebildet ist. Damit wird erreicht, dass bei der Montage ausreichend Spielraum vorhanden ist, um ev. Krümmungen der Karosserie, die den Abstand zueinander verändern, ausgleichen zu können. Dadurch wird eine einfach, unkomplizierte Montage für jedermann ermöglicht.

Von Vorteil ist eine Ausbildung, bei der die Form, insbesondere die Außenform, des rahmenartigen Kennzeichenteils, rechteckig, Rund, Oval oder beliebig, ist. Dadurch kann für die unterschiedlichsten Fahrzeugtypen die optimale Lösung verwendet werden.

Es ist eine Ausbildung von Vorteil, bei der die beiden Kennzeichenhalteteile aus Kunststoff gebildet sind. Dadurch wird erreicht, dass bei der Montage am Fahrzeuge durch die Kennzeichenhalteteile keine Kratzer entstehen können.

Von Vorteil ist eine Ausbildung, bei der der gesamte Kennzeichenhalter, insbesondere die beiden Kennzeichenhalteteile, durch einen 3D-Druck herstellbar sind. Dadurch wird erreicht, dass spezielle Formen für die unterschiedlichsten Fahrzeuge geschaffen werden können, die entsprechende Rücksicht auf die verbauten Sensoren am Fahrzeug nehmen. Hierbei ist es möglich, dass in einer Datenbank für die unterschiedlichsten Fahrzeuge die bevorzugten Formen und Ausbildungen, insbesondere Dicke des Kennzeichenhalters, gespeichert sind, die aufgerufen und ausgedruckt werden können. Hierbei ist es auch möglich, dass die Kennzeichenhalter entsprechend individualisiert werden, indem an den Kennzeichenhalteteile beispielsweise die Kennzeichennummer oder das Name des Kennzeichenhalters integriert werden.

Schließlich ist eine Ausbildung von Vorteil, bei der der Kennzeichenhalteteil einen Rahmen oder einen Aufnahmebereich mit einem Befestigungsmittel aufweist, in dem der weitere Kennzeichenhaltteil mit einem korrespondierenden Befestigungsmittel einsteckbar ist. Dadurch wird erreicht, dass einerseits ein sicherer Halt gegen das Herausfallen gewährleistet ist und andererseits eine seitliche Verschiebung der beiden Teile verhindert wird.

Die Erfindung wird anhand der in den Zeichnungen dargestellten Ausführungsbeispiele näher erläutert. Es wird darauf hingewiesen, dass der Schutzumfang nicht auf das oder die dargestellte Ausbildung beschränkt ist, sondern ähnliche äquivalente Lösungen bzw. Ausbildungen ebenfalls beinhalten.

Es zeigen:
- Fig. 1: eine schematische Ansicht der beiden Kennzeichenhalteteile des Kennzeichenhalters, in vereinfachter, schematischer Darstellung;
- Fig. 2: eine weiter schematische Ansicht von der gegenüberliegenden Seite der Fig. 1 der beiden Kennzeichenhalteteile des Kennzeichenhalters, in vereinfachter, schematischer Darstellung;
- Fig. 3: eine Schnittdarstellung durch die beiden Kennzeichenhalteteile des Kennzeichenhalters, bei dem Fig. 3a den einzusetzenden Kennzeichenhalteteil und Fig. 3b den weiteren Kennzeichenhalteteil zeigt, in vereinfachter, schematischer Darstellung;
- Fig. 4: eine schematische Darstellung der befestigten Kennzeichenhalteteile am Fahrzeug und am Kennzeichen, in vereinfachter schematischer Darstellung;
- Fig. 5: eine schematische Darstellung der zusammengesteckten Kennzeichenhalteteile zu einem Kennzeichenhalter und montiertem Kennzeichen am Fahrzeug, in vereinfachter, schematischer Darstellung;
- Fig. 6: eine Draufsicht auf ein am Fahrzeug montierten Kennzeichen mit zwei Kennzeichenhalter, die vollständig vom Kennzeichen abgedeckt werden, in vereinfachter, schematischer Darstellung;
- Fig. 7: eine Draufsicht auf eine runden Kennzeichenhalter mit zusammengesteckten Kennzeichenhalteteile, in vereinfachter, schematischer Darstellung
- Fig. 8: eine Draufsicht auf einen zusammengesetzten Kennzeichenhalter, bei dem der eingesetzte schmaler bzw. kleiner ausgebildet ist als der Aufnahmebereich des weiteren Kennzeichenhalteteils ausgebildet, ist, in vereinfachter, schematischer Darstellung;
- Fig. 9: ein weiteres Ausführungsbeispiel eines Kennzeichenhalters 1 mit unterbrochen rahmartigen Aufbau, in vereinfachter, schematischer Darstellung;
- Fig. 10: ein anderes Ausführungsbeispiel eines Kennzeichenhalters mit speziellen Aufnahmebereich, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

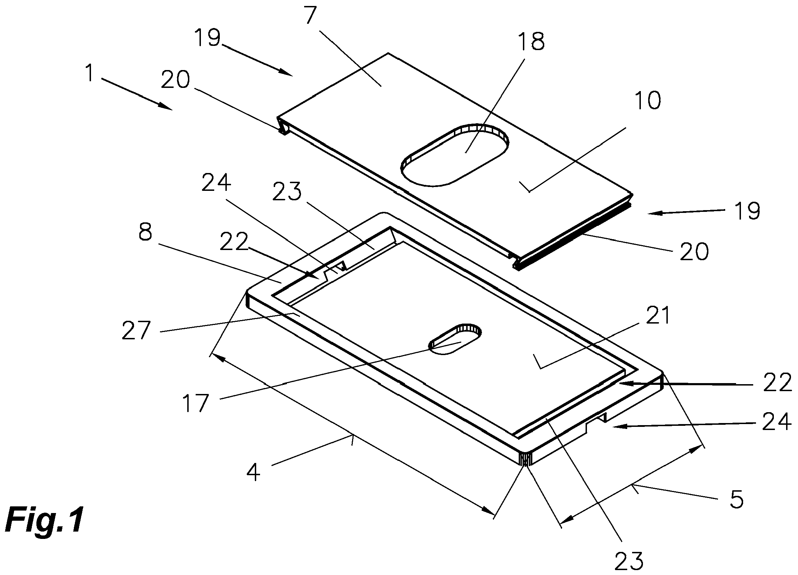

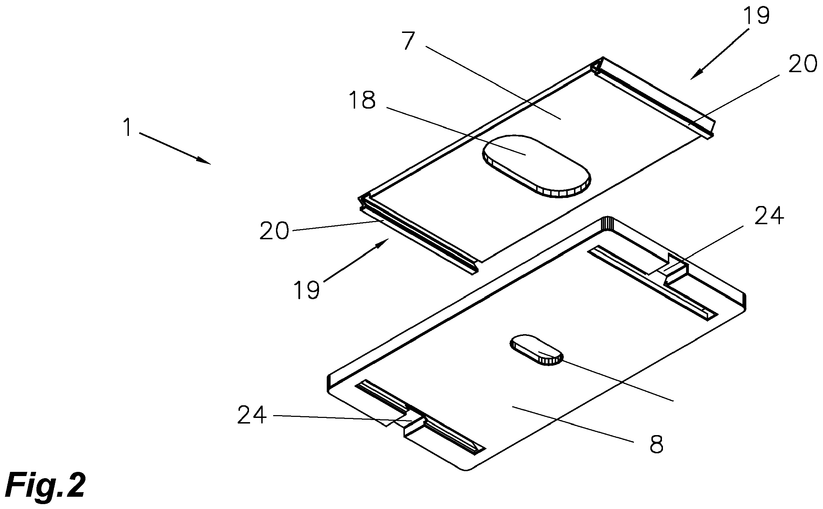

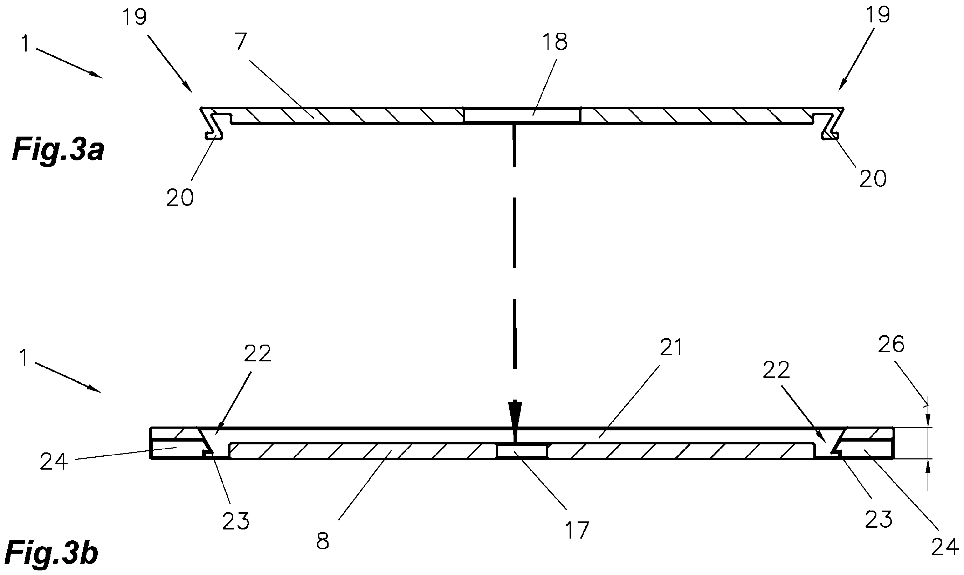

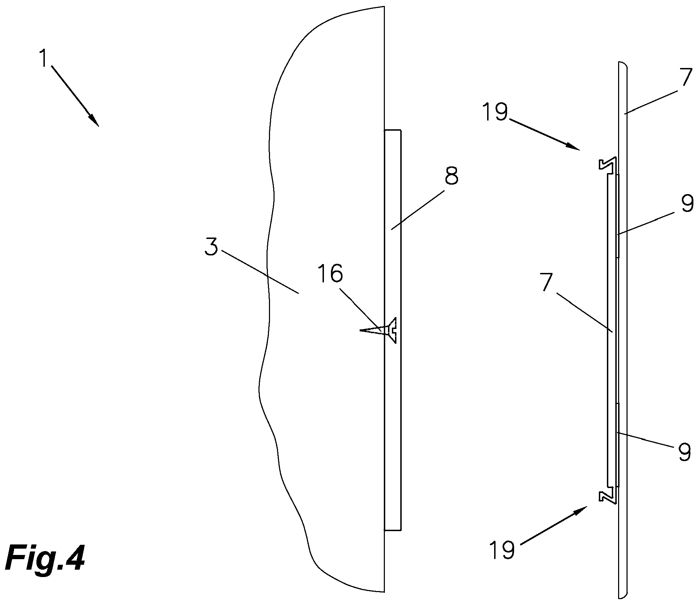

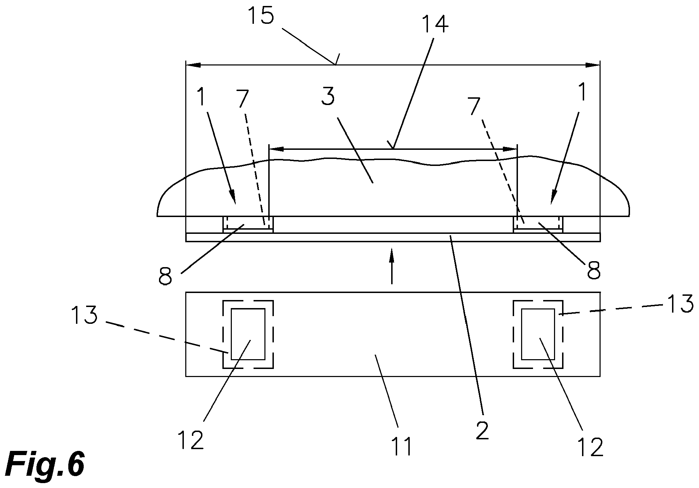

In den Fig. 1 bis 8 ist ein Kennzeichenhalter 1 zur lösbaren Befestigung eines Kennzeichens 2 an einem Fahrzeug 3 gezeigt, d.h., dass das Kennzeichen 2 am Fahrzeug 3 ohne Verformung bzw. Kraftaufwand montiert, aber auch demontiert wird.

Dabei ist vorzugsweise vorgesehen, dass der Kennzeichenhalter 1 vollständig vom Kennzeichen 2 abgedeckt wird, d.h., dass der Kennzeichenhalter 1 ein Länge 4 und Breite 5 aufweist, die kleiner als eine Länge 15 und Breite 6 des Kennzeichens 1 ist, sodass der Kennzeichenhalterl keinerlei optische Beeinträchtigungen verursacht, da dieser hinter dem Kennzeichen 2, insbesondere zwischen Fahrzeug 3 und Kennzeichen 2 positioniert ist. Derartige sogenannte rahmenlose Montagen von Kennzeichen 2 an den Fahrzeugen 3 wird in der Praxis immer beliebter, wobei am Markt keine kostengünstige Kennzeichenhalter 1 vorhanden sind, die diese Kriterien der rahmenlose Befestigung erfüllen, sodass die Inhaber der Fahrzeuge 3 die Kennzeichen 3 über doppelseitige Klebebänder oder Klettbänder direkt am Fahrzeug 3 befestigen, die jedoch bei zu langer Anwendung nicht mehr einfach demontiert werden können. Auch kann es dabei zu Lackschäden kommen, was eine Korrosion der Karosserie zur Folge haben könnte.

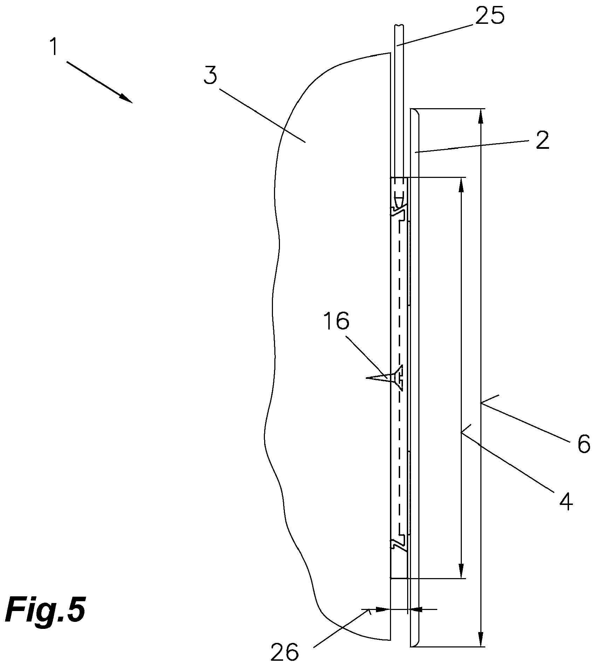

Bei dem erfindungsgemäßen sogenannten rahmenlosen Kennzeichenhalter 1 ist vorgesehen, dass das Kennzeichen 2 jederzeit vom Fahrzeug 3 ohne Verformung des Kennzeichens 2 kraftlos bzw. mit geringer Krafteinwirkung gelöst werden kann. Hierzu wird der Kennzeichenhalter 2 aus zwei Kennzeichenhalteteile 7 und 8 gebildet, wobei der Kennzeichenhalteteile 7 in den weiteren vorzugsweise rahmenartigen Kennzeichenhalteteil 8 eingesetzt wird und somit der Kennzeichenhalter 1 gebildet wird. Vorzugsweise wird das Kennzeichen 2 am Kennzeichenhalteteil 7 und der Kennzeichenhalteteil 8 am Fahrzeug 3 befestigt. Dabei wird der Kennzeichenhalteteil 7 über Klebebänder 9, insbesondere doppelseitige Klebebänder 9, direkt am Kennzeichen 2, wie schematisch in Fig. 5 eingezeichnet, befestigt, wobei hierzu vorzugsweise zuerst die Klebebänder 9 auf einer Oberfläche 10 des Kennzeichenhalteteils 7 aufgeklebt werden und anschließend der Kennzeichenhalteteil 7 am Kennzeichen 3, beispielsweise durch Verwendung einer Schablone 11, positioniert und befestigt wird. Hierzu weist die Schablone 11 dieselbe Form und Größe des Kennzeichens auf und wird einfach auf die Rückseite des Kennzeichens 2 aufgelegt, sodass anschließend der bzw. die Kennzeichenhalteteile 7 in dafür vorgesehene Positionieröffnung 12 eingelegt und befestigt werden. Damit dieselbe Schablone 11 auch für die Positionierung und Ausrichtung des Weiteren rahmenartigen Kennzeichenhalteteil 8 verwendet werden kann, sind hierzu Perforierungen 13 vorgesehen, die herausgenommen werden können, um die unterschiedlichen Kennzeichenhalteteile 7,8 einlegen und positionieren zu können. Eine detaillierte Montageablauf mit einer derartigen Schablone 11 kann aus einer anderen eingereichten Patentanmeldung der Anmelderin entnommen und verwendet werden. Der Vollständigkeitshalber wird bei diesem gezeigten Ausführungsbeispiel darauf hingewiesen, dass zur Befestigung eines einzigen Kennzeichens 2 zwei Kennzeichenhalter 1, die jeweils aus den Kennzeichenhalteteilen 7 und 8 gebildet werden, verwendet wird, sodass deren Ausrichtung und Abstand 14 ebenfalls über die Schablone 11, an der vorzugsweise zwei Positionieröffnungen 13 vorgesehen sind, einfach vorgegeben wird und somit eine sehr einfache Montage erzielt wird. Der Einsatz von zwei kleineren Kennzeichenhalter 1 hat den Vorteil, dass dadurch eine Krümmung der Fahrzeugoberfläche kaum eine Rolle mehr spielt, die der Kennzeichenhalter 1 nicht mehr über die gesamte Länge 15 des Kennzeichens 2 verläuft und somit nicht mehr an die Form der Karosserie angepasst werden muss.

Um einen sicheren Halt zu erreichen, ist es auch möglich, dass die Oberfläche 8 des Kennzeichenhalteteils 7 eine spezielle Struktur aufweisen kann, um einerseits einen sicheren Halte am Kennzeichen 2 zu erreichen und anderseits um den Kennzeichenhalteteil 7 wieder ohne Verformung vom Kennzeichens 2 zu lösen.

Der weitere rahmenartige Kennzeichenhalteteil 8 wird, wie aus dem Stand der Technik üblich, über Befestigungsmittel 16, insbesondere einer Schraube oder Niete, am Fahrzeug 3 befestigt. Vorzugsweise erfolgt die Befestigung über ein vorzugsweise zentrale angeordnetes Befestigungsmittel 16, wozu am Kennzeichenhalteteil 8 eine entsprechende Befestigungsbohrung 17, durch die das Befestigungsmittel 16 gesteckt und geschraubt wird, angeordnet. Vorzugsweise wird hierzu ein langlochartige Ausbildung der Befestigungsbohrung 17 eingesetzt, sodass jederzeit eine entsprechende Justage vorgenommen werden kann. Selbstverständlich ist es möglich, dass zur Befestigung des Kennzeichenhalteteils 8 auch mehrere, insbesondere zwei Befestigungsmittel 16, verwendet werden können. Damit das Befestigungsmittel 16, insbesondere der Kopf des Befestigungsmittel 16, den einzusetzenden weiteren Kennzeichenhalteteil 7 nicht stört, ist an der korrespondierenden gegenüberliegenden Position des Weiteren Kennzeichenhalteteils 7 eine Ausnehmung 18 vorgesehen. Damit wird beim Zusammenstecken der beiden Kennzeichenhalteteile 7 und 8 das Befestigungsmittel 16 aufgenommen und es kann eine

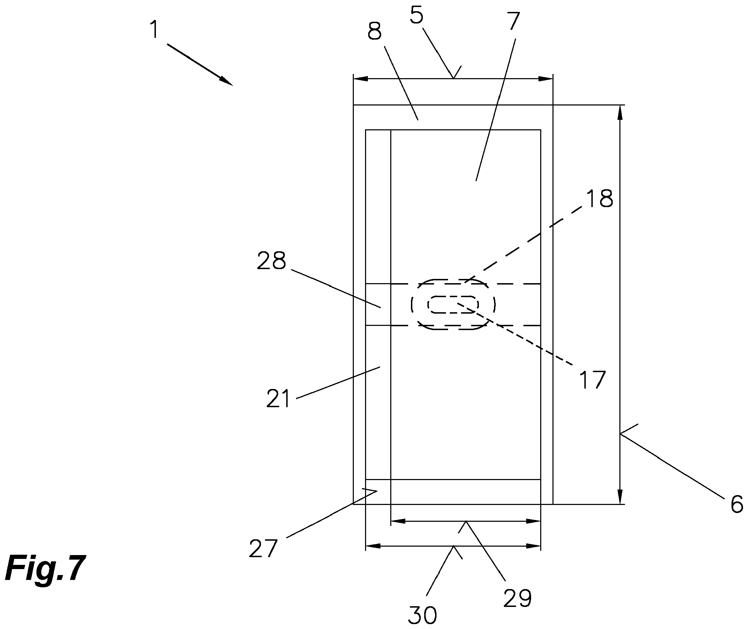

Zum Bilden eines Kennzeichenhalters 1 werden die beiden Kennzeichenhalteteile 7 und 8 ineinandergesteckt, sodass die an die Kennzeichenhalteteile 7 und 8 befestigten Teile, also das Kennzeichen 2 am Kennzeichenhalteteil 7 und das Fahrzeug 3 am Kennzeichenhalteteil 8, miteinander lösbar verbunden bzw. befestigt werden. Dies erfolgt dabei über eine Rastverbindung. Hierzu ist am Außenumfang des einzusetzenden Kennzeichenhalteteils 7 ein Befestigungsmittel 19 angeordnet bzw. angeformt, dass einen flexiblen Rasthacken 20 aufweist. Bei dem dargestellten Ausführungsform ist die Geometrie des einzusetzenden Kennzeichenhalteteils 7 so gewählt, dass dieses um 180 gedreht, also symmetrisch aufgebaut, in den rahmenartigen Kennzeichenhalteteil 8 eingesetzt werden kann, sodass bei dieser Ausführungsform ein weiteres gegenüberliegendes über die gesamte Breite 5 des Kennzeichenhalteteils 7 verlaufendes Befestigungselement 19 angeordnet ist. Es wird jedoch der vollständigkeitshalber erwähnt, dass grundsätzlich ein einziges über einen am Außenumfang des Kennzeichenhalteteils 7 verlaufenden Teilbereich der Breite 5 oder Länge 6 angeordnetes Befestigungsmittel 19 ausreicht, um eine Rastverbindung mit dem rahmenartigen Kennzeichenhalteteil 8 auszubilden. Korrespondierend ist am Innenumfang, insbesondere einer Vertiefung 21 oder Ausnehmung 21, des rahmenartigen Kennzeichenhalteteils 8 ein korrespondierendes Befestigungsmittel 22 angeordnet, dass vorzugsweise eine Rastkante 23 ausbildet, hinter der der Rasthacken 19 einrasten kann und somit den Kennzeichenhalteteil 7 in der Vertiefung 21 gemäß den Fig. 1 bis 6 oder einer Ausnehmung 21, wie in Fig. 8 gezeigt, befestigt. Wie ersichtlich, weist der Rasthacken 20 eine Z-förmige Form auf, die sich vom Kennzeichenhalteteil 7 weg erstreckt, um an der Rastkante 23 des weiteren Kennzeichenhalteteil 8 einrasten zu können. Hierzu ist es vorteilhaft, wenn vor der Rastkante eine Spalt 31 bzw. Öffnung 31 im Bodenelement 32 der Vertiefung 21 angeordnet ist, damit der Rasthacken 20 des Weiteren Kennzeichenhalteteils 7 einfach eingesteckt und Freiraum hat.

Bei diesem Ausführungsbeispiel sind die Befestigungsmittel 19 und 22 an der Schmalseite der Kennzeichenhalteteile 7 und 8 angeordnet, wobei jedoch auch eine Anordnung auf der Längsseite oder auch eine Kombination auf Breitseite und Längsseite möglich ist. Grundsätzlich ist es ausreichend, wenn über einen Teilbereich am Außenumfang und am korrespondierend Innenumfang ein einziges flexibles Befestigungsmittel 19 und einem korrespondierenden Befestigungsmittel 21 angeordnet ist, wogegen die andere Bereich so ausgebildet sind, dass die Kennzeichenhalteteile 7 und 8 gehalten werden und über das flexible Befestigungsmittel 19 die Kennzeichenhalteteile 7 und 8 wieder gelöst werden können, d.h., dass ein Kennzeichenhalteteil 7 über einen Teilbereiches des Außenumfangs bzw. der Außenfläche ein Befestigungsmittel 19 aufweist, welches mit dem weiteren Kennzeichenhalteteil 8 verbindbar ist.

Damit die beiden Kennzeichenhalteteile 7 und 8 gelöst werden können, ist im rahmenartigen Kennzeichenhalteteil 8 eine oder mehrere Entriegelungsöffnungen 24 vorgesehen, die durch den Rahmen 27 bzw. Grundkörper des Kennzeichenhalteteils 8 und dem Befestigungsmittel 21 läuft. Die Entriegelungsöffnung 24 kann dabei aus einer Aussparung oder Bohrung oder Langloch usw. gebildet sein und hat die Aufgabe, dass durch die Entriegelungsöffnung 24 Zugang zum flexiblen eingerasteten Befestigungsmittel 19 des weiteren Kennzeichenhalteteils 7 geschaffen wird, sodass durch Druckbeaufschlagung auf das flexible Befestigungsmittel 19, insbesondere den Rasthacken 20, dieser außereingriff gebracht wird und somit der Kennzeichenhalteteil 7 vorzugsweise samt befestigtem Kennzeichen 2 kraftlos aus dem Kennzeichenhalteteil 8 entnommen werden kann, d.h., zum Lösen der beiden Kennzeichenteile 7 und 8 wird ein Entriegelungsmittel 25, insbesondere ein Schraubenzieher, Nagel, Metallstab, Metallteil, usw., wie in Fig.5 schematisch gezeigt, durch die Entriegelungsöffnung 24 eingeschoben wird, wodurch über das Entriegelungsmittel 24 Druck auf das flexible eingerastete Befestigungsmittel 19 zum Lösen des eingesetzten Kennzeichenhalteteils 7 ausgeübt wird. Dadurch kann das Befestigungsmittel 19 soweit zurückgedrückt werden, dass der Rasthacken 20 außereingriff zur Rastkante kommt und der Kennzeichenhalteteil 7, insbesondere das Kennzeichen 2 samt befestigten Kennzeichenhalte7, entnommen werden kann. Dies ist deshalb möglich, da das Entriegelungsmittel 25 zwischen Fahrzeug 3 und Kennzeichen 2, wie schematisch in Fig. 5 dargestellt, aufgrund der Dicke 26 bzw. Höhe 26 des Kennzeichenhalters 1 nicht direkt am Fahrzeug 3 anliegt, sondern dieses über diese Dicke 26 bzw. Bauhöhe 26 bzw. Höhe 26 distanziert ist und somit das Entriegelungsmittel 25 dazwischen eingeführt werden kann. Vorzugsweise weist der Kennzeichenhalter 1, also mit zusammengefügten Kennzeichenhalteteile 7 und 8, eine Dicke 26 bzw.

Höhe 26 zwischen 3 mm und 8 mm, vorzugsweise 4 mm bis 5 mm, auf, da dadurch der optische Eindruck noch nicht beeinträchtigt wird.

Der vollständigkeitshalber wird noch erwähnt, dass bei dem gezeigten Ausführungsbeispiel der rahmenartige Kennzeichenhalteteil 8 den weiteren Kennzeichenhalteteil 7 zur Bildung des Kennzeichenhalters 1 vollständig aufnehmt und sich die Teile nicht überlappen. Selbstverständlich ist jedoch eine Lösung möglich, bei dem nur ein Teil des Kennzeichenhalteteils 7 in die Vertiefung 21 oder Ausnehmung 21 aufgenommen wird und der restliche Teil den rahmenartigen Kennzeichenhalteteil 8 überragt bzw. überlappt. Wesentlich ist, dass ein Kennzeichenhalteteil 7 oder 8, vorzugsweise jener zur Befestigung am Kennzeichen 2, mit einem vorzugsweise flexiblen Befestigungsmittel 19 in den weiteren rahmenartig ausgebildeten weiteren Kennzeichenhalteteil 8 oder 7 eingesetzt wird, insbesondere verrastet wird, wobei das rahmenartigen Kennzeichenhalteteil 8 ein korrespondierendes Befestigungsmittel 22 zur Verrastung der beiden Kennzeichenhalteteile 7 und 8 zueinander aufweist.

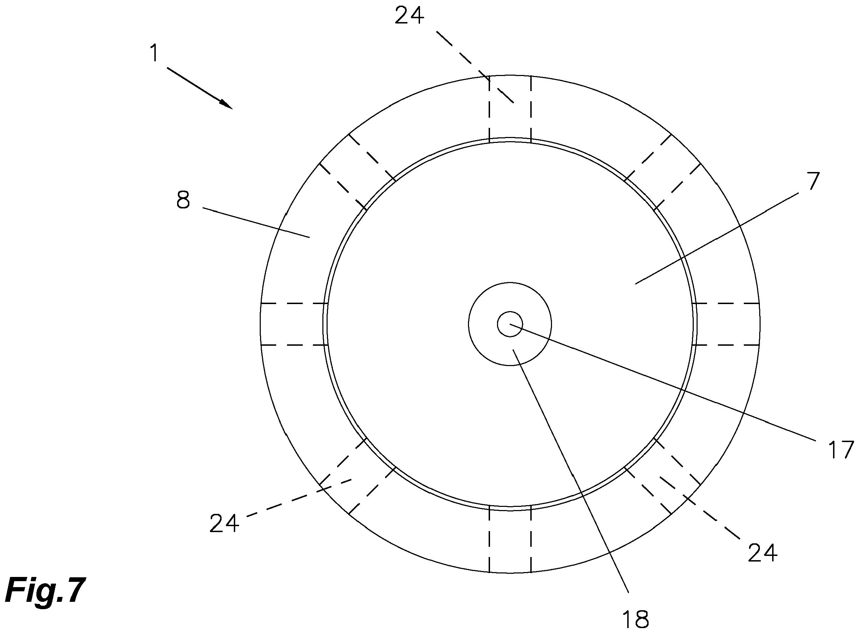

In den Ausführungsbeispiel der Fig. 1 bis 6 weist der Kennzeichenhalter 1, der aus den Kennzeichenhalteteile 7 und 8 gebildet wird, eine rechteckige Form auf. Dies ist jedoch nicht zwingend erforderlich, sondern die Form des Kennzeichenhalters 1 kann beliebig, insbesondere rund, oval, quadratisch, usw., ausgebildet sein. Hierzu wurde in Fig. 7 ein runder Kennzeichenhalter 1 gezeigt, bei dem der Kennzeichenhalteteil 7 bereits im Kennzeichenhalteteil 8, insbesondere in die Vertiefung 21, eingesetzt und verrastet ist. Bei dieser Ausführungsform sind mehrere Entriegelungsöffnungen 24 vorgesehen, sodass im montierten Zustand jene Person, die das Kennzeichen 2 vom Fahrzeug 3 abnehmen möchte, schnell eine Entriegelungsöffnung 24 findet und durch Einschieben eines Entriegelungsmittels 25 die Rastverbindung, insbesondere die Befestigungsmittel 19 und 22, voneinander löst kann.

Ein weitere Ausführungsvariante ist in Fig. 8 dargestellt, bei der der Kennzeichenhalter 1 wiederum eine rechteck-förmige Form mit einer Länge 4 und eine Breite 5 aufweist, wobei die Höhe 26 vorzugsweise 4 mm beträgt. Bei diesem Ausführungsbeispiel ist der ausgebildete Rahmen 27 des rahmenartigen Kennzeichenhalteteils 8 unterschiedlich Breit ausgeführt, wobei auf der Schmalseite der Rahmen 27 breiter als auf der Längsseite ausgebildet ist. Weiters ist nunmehr anstelle einer Vertiefung 21 zum Aufnehmen des Weiteren Kennzeichenhalteteils 7 eine Ausnehmung 21, die durch die gesamte Dicke bzw. Höhe 26 des rahmenartigen Kennzeichenhalteteils 8 verläuft, ausgeführt ist, wobei für die Befestigung des Kennzeichenhalteteils 8 ein oder mehrere Stege 28 mit der Befestigungsbohrung 17 angeordnet bzw. angeformt ist.

Korrespondierend ist nunmehr der weitere Kennzeichenhalteteil 7 ausgebildet, wobei dieser nunmehr die Ausnehmung 21 ausfüllt, also eine größere Dicke bzw. Höhe aufweist als bei den andere Varianten, da die vollständige Bauteildicke 26 des Kennzeichenhalteteils 8 ebenfalls teilweise genützt wird. Im Bereich des Steges 28 ist jedoch im Kennzeichenhalteteil 7 eine Vertiefung (nicht ersichtlich) bzw. Ausbuchtung angeordnet, sodass der Steg 28 darin aufgenommen wird und die beiden Teile wieder zu einem Kennzeichenhalter 1 zusammengefügt werden können. Hierzu ist wiederum zur Aufnahme eines Teils des Befestigungsmittel 16, insbesondere des Kopfes, die Ausnehmung 18, die jedoch nunmehr als Vertiefung ausgeführt und nicht mehr durch die gesamte Bauteildicke verlauft, angeordnet ist.

Wesentlich ist jedoch, dass das weitere eingesetzte Kennzeichenhalteteil 7 eine geringere Breite 29 aufweist als die Innenbreite 30 des Rahmens 27, d.h., dass das Kennzeichenhalteteil 7 nicht den gesamten Innenraum des Rahmens 27 ausfüllt, sondern nur über einen Teilbereich ausgefüllt wird. Dies hat den Vorteil, dass dadurch bei der Montage Toleranzen, die aufgrund der Krümmung des Karosserieverlaufes des Fahrzeuges 3 auftreten, einfach ausgeglichen werden können. Somit müssen die beiden Teile nicht exakt gegenüberliegend montiert werden, da die Verrastung an der Schmalseite erfolgt, die die vollständige Innenlänge des Rahmens 27 ausfüllt. Werden die Befestigungsmittel jedoch an den Längsseiten angeordnet, so dreht sich der Aufbau um 90 Grad, sodass der Kennzeichenhalteteil 7 über die gesamte Innenraumbreite zum Verrasten am Rahmen 27 verläuft.

Der vollständigkeitshalber wird erwähnt, dass es auch möglich ist, dass der Kennzeichenhalteteil 7 am Fahrzeug 3 und der weitere rahmenartige Kennzeichenhalteteil 8 am Kennzeichen 2, also umgekehrt, befestigt werden können.

Es wird auch erwähnt, dass das Befestigungsmittel 19 am Außenumfang des Kennzeichenhalteteils 7 derart ausgebildet wird, dass dieses zum Eingriff bzw. Verrasten mit einem weiteren auf einem anderen Teil, insbesondere den rahmenartigen Kennzeichenhalteteil 8, angeordneten Befestigungsmittel 22 ausgebildet ist, wobei der Rasthacken 20 vom Kennzeichenhalteteil 7 weg ragt bzw. absteht.

Vorzugsweise wird der Kennzeichenhalter 1, insbesondere die Kennzeichenhalteteile 7 und 8, aus Kunststoff gebildet, sodass eine kostengünstige Herstellung möglich ist. Die einzelnen Teile können dabei über eine Spritzgießwerkzeug hergestellt werden. Um jedoch spezielle Formen des Kennzeichenhalters 1 einfach herstellen zu können, ist es möglich, dass die Teile, insbesondere Kennzeichenhalteteile 7 und 7, durch einen 3D-Druck erstellt werden. Damit können optimal an das Fahrzeug 3 angepasste Kennzeichenhalter 1 ausgedruckt werden. Hierbei ist es möglich, dass beispielsweise anstelle einer Schraubverbindung direkt am Kennzeichenhalter 1 entsprechende Raststöpsel bzw. Rastzapfen angeformt sind, die in entsprechende Befestigungsbohrungen am Fahrzeug 3 eingesteckt und verrastet werden können.

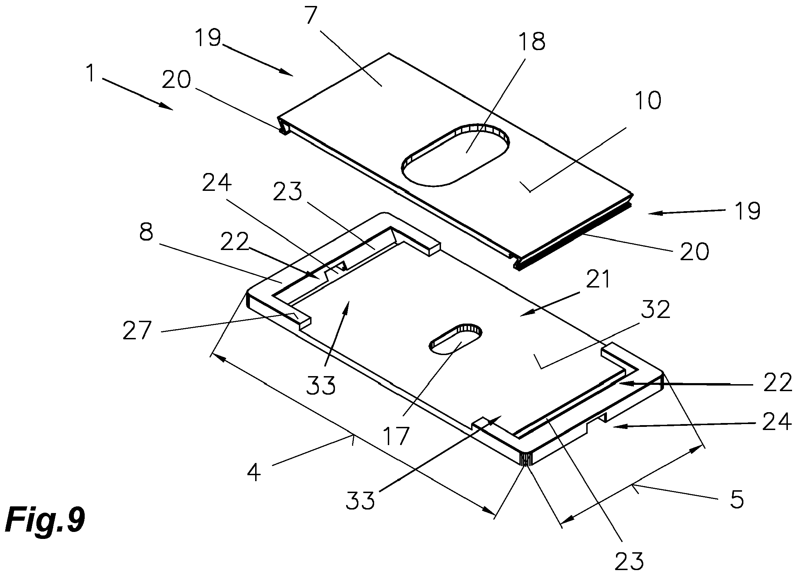

Weiters ist in Fig. 9 eine Ausführungsvariante gezeigt, bei der der Rahmen 27 nicht mehr vollständig am vorzugsweise rahmenartigen Kennzeichenhalteteil 8 ausgebildet ist, sondern nur noch einen Teilbereich der Grundfläche des Kennzeichenhalteteils 8 ausbildet, d.h., dass das Kennzeichenhalteteil 8 zumindest einen vorzugsweise zwei Aufnahmebereiche 33, die durch einen Teil eines Rahmens 27 entsprechen, aufweist, die eine seitliche Fixierung für den weiteren Kennzeichenhalteteil 7 bilden. Dies ist insofern von Vorteil, wenn der Kennzeichenhalter 1 durch einen 3D-Druck hergestellt wird, da dadurch Material eingespart wird und gleichzeitig die Druckzeit verkürzt wird.

Um noch mehr Material einzusparen, ist es auch möglich das das Bodenelement 32 durch warben-förmige Vertiefungen (nicht dargestellt) bei den zuvor beschriebenen Ausführungsbeispielen ausgebildet sein kann. Ebenfalls kann der Rahmen 27 auch hohl ausgebildet werden, um noch weiteres Material einzusparen. Durch die Materialeinsparung wird auch erreicht, dass die Druckzeit verkürzt wird. Der vollständigkeitshalber wird erwähnt, dass der Kennzeichenhalter 1 auch durch andere Herstellungsverfahren, wie beispielsweise durch ein Spritzgießverfahren, hergestellt werden kann.

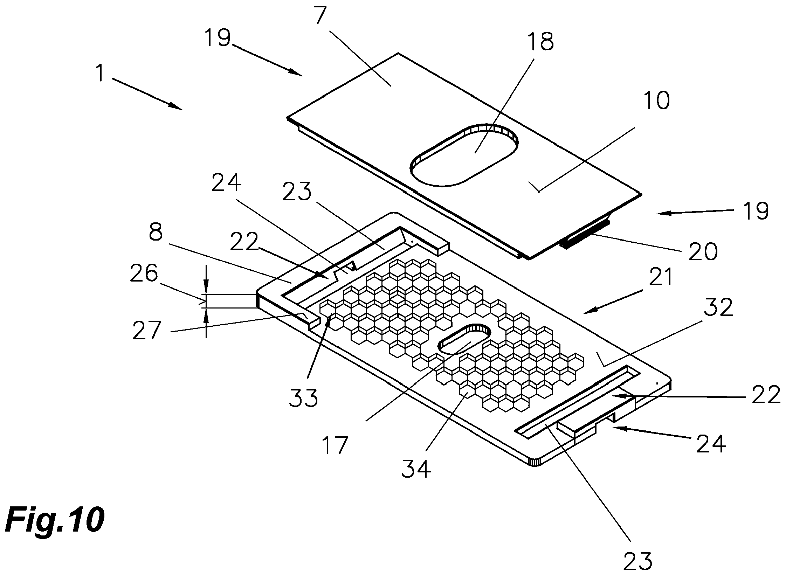

Weiters ist in Fig. 10 eine Variante dargestellt, bei der der Kennzeichenhalter 8 wiederum einen nur angedeuteten rahmenartigen Aufbau aufweist, d.h., dass in einem Bereich über einen Teil des Grundkörpers der Aufnahmebereich 33 geschaffen wird. Dabei ist es möglich, dass die gegenüberliegende Seite, wie dargestellt, auch anders ausgeführt sein kann. Bei diesem Ausführungsvariante weist der Kennzeichenhalter 7 auch nur über einen Teilbereich der Außenfläche bzw. Außenumfang verlaufendes Befestigungsmittel 19, insbesondere den flexiblen Rasthacken 20 auf, sodass dieser einmal in den rahmenartigen Aufnahmebereich 33 eingesetzt werden kann und andererseits im verblieben Rahmstück eingreift und verrastet. Weites sind am Bodenelement 32 warben-artige Vertiefungen 34 vorgesehen, die wiederum Material bei einer 3D-Druckherstellung sparen soll.

Wie aus den Ausführungsbeispielen der Figuren 1 bis 10 ersichtlich ist, kann der Aufbau unterschiedlich erfolgen, wobei erfindungsgemäße ein Kennzeichenhalter 1 zur lösbaren Befestigung eines Kennzeichens 2 an einem Fahrzeug 3 vorgesehen ist, wobei der Kennzeichenhalter 1 aus zwei unterschiedliche Kennzeichenhalteteile 7,8 gebildet ist, wobei ein Kennzeichenhalteteil 7,8 direkt am Kennzeichen 2 und das weitere Kennzeichenhalteteil 7,8 am Fahrzeug 3 befestigt ist, wobei ein Kennzeichenhalteteil 8 mit zumindest einer Vertiefung 21 oder Ausnehmung 21 ausgebildet ist, in dem das weitere Kennzeichenhalteteil 7 aufgenommen und beide über Befestigungsmittel 19,22 miteinander fixiert und befestigt sind. Somit wird ein Verfahren zum Befestigen eines Kennzeichens 2 an einem Fahrzeug 3, insbesondere KFZ-Fahrzeug, Pedelecs, usw., geschaffen, bei dem das Kennzeichen 2 über einen Kennzeichenhalter 1 befestigt wird, wobei der Kennzeichenhalter 1 aus zwei Kennzeichenhalteteile 7,8 gebildet wird und ein Kennzeichenhalteteil 7,8 am Fahrzeug 3 und das weiter Kennzeichenhalteteil 8,7 direkt am Kennzeichen 2 befestigt wird, sodass bei der Montage des Kennzeichen 2 die beiden Kennzeichenhalteteil 7,8 des Kennzeichenhalters 1 ineinander greifen, wobei ein Kennzeichenhalteteil 7, vorzugsweise jener zur Befestigung am Kennzeichen 2, mit einem vorzugsweise flexiblen Befestigungsmittel 19 in den weiteren vorzugsweise rahmenartig ausgebildeten weiteren Kennzeichenhalteteil 8 eingesetzt wird, insbesondere verrastet wird, wobei das vorzugsweise rahmenartigen Kennzeichenhalteteil 8 ein korrespondierendes Befestigungsmittel 22 zur Verrastung der beiden Kennzeichenhalteteile 7,8 zueinander aufweist. Dabei ist wird erreicht, dass die Dicke 26 bzw. Breite 26 möglichst gering, also zwischen 3 und 10 mm, insbesondere 5mm, betragen soll, um das Kennzeichen 2 nicht zu weit von der Oberfläche der Karosserie des Fahrzeuges 3 abstehen zu lassen, wobei das Kennzeichen 2 vollständig auf allen Seiten den Kennzeichenhalter 1 abdeckt, sodass dieser beim Betrachten des Fahrzeuges 3 nicht sichtbar ist. Hierbei können zum Montieren eines Kennzeichen 2 oder eines Schildes ein oder mehrere, also zwei, drei usw., Kennzeichenhalter 1, die jeweils aus dem Kennzeichenhalteteil 7,8 bestehen, verwendet werden. Vorteil ist bei der Verwendung eines Kennzeichenhalters 1 das dieser ohne Beschädigung des Kennzeichen 2 oder Schildes 3 an einer Oberfläche eines Gegenstandes befestigt und vor allem wieder ohne Verformungen demontiert werden können.

Es wird auch erwähnt, dass der Kennzeichenhalter 1 an anderen Gegenständen, Objekte eingesetzt werden kann, wobei hierzu vorzugsweise ein Kennzeichen oder Schild, wie beispielsweise eine Hausnummer, oder Namensschild, usw., befestigt werden soll, bei dem das Kennzeichen oder Schild nicht zerstört werden soll, wie dies bei Schraubenbohrungen oder Schrauben der Fall ist.

Vorzugsweise wird der Kennzeichenhalter 1 bei zwei oder mehrspurige Fahrzeugen 3 wie KFZ-Fahrzeuge, insbesondere PKW oder LKW, Motorräder, Fahrräder, Pedelecs eingesetzt. Dabei hat sich die Herstellung als 3D-Druck als sehr vorteilhaft ergeben, da beispielsweise bei einer Anwendung bei Pedelecs eine entsprechende Form des Kennzeichenhalters 8 für die Befestigung angepasst werden kann, d.h., dass eine gekrümmte Montagfläche bzw. Unterseite hergestellt wird, die an einem Kotflügel montiert werden kann.

Auch können an den Kennzeichenhalter 1, insbesondere dem Kennzeichenhalteteil 8, entsprechende Halteelemente, insbesondere Schellen, Schraubschellen, Rastbänder usw., befestigt oder angeformt sein, um eine direkte Befestigung beispielsweise an einem Rahmen eines Fahrzeuges zu ermöglichen. Der Kennzeichenhalter 1 dient vor allem zur Befestigung von amtlichen Kennzeichen an motorisierte oder elektrisch betriebenen Fahrzeugen, die für den Betrieb ein amtliches Kennzeichen 2 benötigen. Grundsätzlich können jedoch auch andere Kennzeichen oder Schilder damit auch befestigt werden.

Der Ordnung halber wird darauf hingewiesen, dass die Erfindung nicht auf die dargestellten Ausführungsvarianten beschränkt ist, sondern auch weitere Ausbildungen beinhalten kann. Auch können die gezeigten unterschiedlichen Ausführungsvarianten der Figuren 1 bis 10 auf andere Figuren 1 bis 10 übertragen werden.

## Patentansprüche

1. Verfahren zum Befestigen eines Kennzeichens (2) an einem Fahrzeug (3), insbesondere KFZ-Fahrzeug, Pedelecs, usw., bei dem das Kennzeichen (2) über einen Kennzeichenhalter (1) befestigt wird, wobei der Kennzeichenhalter (1) aus zwei Kennzeichenhalteteile (7,8) gebildet wird und ein Kennzeichenhalteteil (7,8) am Fahrzeug (3) und das weiter Kennzeichenhalteteil (8,7) direkt am Kennzeichen (2) befestigt wird, sodass bei der Montage des Kennzeichen (2) die beiden Kennzeichenhalteteil (7,8) des Kennzeichenhalters (1) ineinander greifen, **dadurch gekennzeichnet, dass** ein Kennzeichenhalteteil (7), vorzugsweise jener zur Befestigung am Kennzeichen (2), mit einem vorzugsweise flexiblen Befestigungsmittel (19) in den weiteren vorzugsweise rahmenartig ausgebildeten weiteren Kennzeichenhalteteil (8) eingesetzt wird, insbesondere verrastet wird, wobei das vorzugsweise rahmenartigen Kennzeichenhalteteil (8) ein korrespondierendes Befestigungsmittel (22) zur Verrastung der beiden Kennzeichenhalteteile (7,8) zueinander aufweist.

2. Verfahren nach Anspruch 1, **dadurch gekennzeichnet, dass** der Kennzeichenhalter (1) nach einem der Ansprüche 10 bis 16 ausgebildet wird.

3. Verfahren nach Anspruch 1 oder 2, **dadurch gekennzeichnet, dass** zum Lösen der beiden Kennzeichenteile (7,8) ein Entriegelungsmittel (25), insbesondere ein Schraubenzieher, Nagel, Metallband, Metallstab, usw., durch eine Entriegelungsöffnung (24) eingeschoben wird, wodurch über das Entriegelungsmittel (25) Druck auf das Befestigungsmittel (19) zum Lösen des eingesetzten Kennzeichenhalteteils (7) ausgeübt wird.

4. Verfahren nach einem der vorhergehenden Ansprüche, **dadurch gekennzeichnet, dass** das vorzugsweise flexible Befestigungsmittel (19) über einen Teilbereich des Außenumfangs des Kennzeichenhalteteils (7) zum Einsetzen in den Kennzeichenhalteteils (8), insbesondere in den Rahmen (27) oder Aufnahmebereich (31), angeordnet wird.

5. Verfahren nach Anspruch 1 oder 2, **dadurch gekennzeichnet, dass** der Kennzeichenhalteteil (8) für das Fahrzeug (3) vorzugsweise über eine Schraubverbindung (16) und das Kennzeichenhalteteil (7) für das Kennzeichen (2) vorzugsweise über ein doppelseitiges Klebestreife (9) am Kennzeichen (2) befestigt wird.

6. Verfahren nach einem der vorhergehenden Ansprüche, **dadurch gekennzeichnet, dass** im zusammengesteckten Zustand der beide Kennzeichenhalteteile (7,8) eine gesamte Dicke (26) bzw. Bauhöhe (26) zwischen 3mm und 10mm, insbesondere 5 mm, erzielt wird.

7. Verfahren nach einem der vorhergehenden Ansprüche, **dadurch gekennzeichnet, dass** der Kennzeichenhalteteil (8) den weiteren Kennzeichenhalteteil (7) vollständig aufnimmt und vorzugsweise umschließt.

8. Verfahren nach einem der vorhergehenden Ansprüche, **dadurch gekennzeichnet, dass** im vorzugsweise rahmenartigen Kennzeichenhalteteil (8) ein Befestigungssteg (28) vorzugsweise mit einer Befestigungsbohrung (17) für ein Schraube angeordnet wird.

9. Verfahren nach einem der vorhergehenden Ansprüche, **dadurch gekennzeichnet, dass** das Kennzeichen (2) im montierten Zustand den Kennzeichenhalter (1) vollständig abdeckt.

10. Kennzeichenhalter (1) zur lösbaren Befestigung eines Kennzeichens (2) an einem Fahrzeug (3), wobei der Kennzeichenhalter (1) aus zwei unterschiedliche Kennzeichenhalteteile (7,8) gebildet ist, wobei ein Kennzeichenhalteteil (7,8) direkt am Kennzeichen (2) und das weitere Kennzeichenhalteteil (7,8) am Fahrzeug (3) befestigt ist, **dadurch gekennzeichnet, dass** ein Kennzeichenhalteteil (8) mit zumindest einer Vertiefung (21) oder Ausnehmung (21) ausgebildet ist, in dem das weitere Kennzeichenhalteteil (7) aufgenommen und beide über Befestigungsmittel (19,22) miteinander fixiert und befestigt sind.

11. Kennzeichenhalter (1) nach Anspruch 10, **dadurch gekennzeichnet, dass** ein Kennzeichenhalteteil (7) über einen Teilbereich des Außenumfangs bzw. der Außenfläche ein Befestigungsmittel (19) aufweist, welches mit dem weiteren Kennzeichenhalteteil (8) verbindbar ist.

12. Kennzeichenhalter (1) nach Anspruch 10 oder 11, **dadurch gekennzeichnet, dass** die Größe des Kennzeichenhalter (1), insbesondere der Kennzeichenhalteteile (7,8) derart ausgebildet ist, dass nach der Montage des Kennzeichens (2) am Fahrzeug (3) oder einem anderen Gegenstand die Kennzeichenhalteteile (7,8) vollständig vom Kennzeichen (1) abgedeckt sind.

13. Kennzeichenhalter (1) nach Anspruch 10 oder 12, **dadurch gekennzeichnet, dass** zum Befestigen eines Kennzeichens (2) zwei Kennzeichenhalter (1) am Fahrzeug (3) befestigt sind.

14. Kennzeichenhalter (1) nach einem der vorhergehenden Ansprüche 10 bis 13, **dadurch gekennzeichnet, dass** die Kennzeichenhalteteile (7,8) aus Kunststoff gebildet sind.

15. Kennzeichenhalter (1) nach einem der vorhergehenden Ansprüche 10 bis 14, **dadurch gekennzeichnet, dass** die Ausnehmung (21) bzw. Vertiefung (21) des Kennzeichenhalteteils (8) breiter als die Breite (29) des Weiteren in die Ausnehmung (21) bzw. Vertiefung (21) einsteckbaren Kennzeichenhalteteils (7) ausgebildet ist.

16. Kennzeichenhalter (1) nach einem der vorhergehenden Ansprüche 10 bis15, **dadurch gekennzeichnet, dass** die Form, insbesondere die Außenform, des vorzugsweise rahmenartigen Kennzeichenteils (7,8), rechteckig, Rund, Oval oder beliebig ist.

17. Kennzeichenhalter (1) nach einem der vorhergehenden Ansprüche 10 bis 16, **dadurch gekennzeichnet, dass** die beiden Kennzeichenhalteteile (7,8) aus Kunststoff gebildet sind.

18. Kennzeichenhalter (1) nach einem der vorhergehenden Ansprüche 10 bis 17, **dadurch gekennzeichnet, dass** der gesamte Kennzeichenhalter (1), insbesondere die beiden Kennzeichenhalteteile (7,8), durch einen 3D-Druck herstellbar sind.

19. Kennzeichenhalter (1) nach einem der vorhergehenden Ansprüche 10 bis 18, **dadurch gekennzeichnet, dass** der Kennzeichenhalteteil (8) einen Rahmen (27) oder einen Aufnahmebereich (33) mit einem Befestigungsmittel (22) aufweist, in dem der weitere Kennzeichenhaltteil (7) mit einem korrespondierenden Befestigungsmittel (19) einsteckbar ist.
